# EUROPEAN PATENT APPLICATION

(11) **EP 2 811 415 A1**
(43) Date of publication of application: **10.12.2014**
(21) Application number: 12867205.2
(22) Date of filing: 31.01.2012
(51) Int. Cl.: G06F 17/30, G06Q 10/06, G06Q 50/28

(54) **MOBILE TERMINAL MANAGEMENT SERVER, AND MOBILE TERMINAL MANAGEMENT PROGRAM**

(71) Applicant: ISP Co., Ltd., Osaka-shi Osaka 5300011 (JP)
(72) Inventor: AKITA, Toshifumi, Osaka-shi Osaka 5300011 (JP)
(74) Representative: Grünecker, Kinkeldey, Stockmair & Schwanhäusser
(86) International application number: PCT/JP2012/000641
(87) International publication number: WO 2013/114449

(57) **Abstract**

In a business system that provides information about a report to a mobile communication terminal, a processing load required for a data search is reduced, and valid information is rapidly output. A mobile terminal management server 10 run by enterprise resource planning (ERP) receives and accepts a designated search condition from a mobile terminal 31, extracts inventory-related data including an item related to inventory management of a product represented by the accepted search condition from process flow data stored in a process flow data table PT, generates inventory management information including inventory transition of the product represented by the designated search condition based on the inventory-related data, and provides the generated inventory management information to the mobile terminal 31.

## Description

### Technical Field

The present invention relates to a mobile terminal management server which is a server run by enterprise resource planning (ERP) and provides various kinds of data via a communication network according to a request from a mobile terminal used by a user, and a mobile terminal management program installed in the mobile terminal management server.

### Background Art

Heretofore, one so-called ERP (Enterprise Resource Planning) has become mainstream as package software for establishing a core business system for a company. In a core business system in which this ERP is contained (an integrated core business system, an ERP system), it is most often constructed on a relational database, and design of an application program that focuses on business processes is mostly made. Thus, it is often operated without focusing on report output.

For the purpose of processing the large amount of business data at a high speed, analyzing the business data from various angles, and outputting reports under such a situation, various data warehouse systems that undertake a complementary role to the core business system have been provided (see Patent Literature 1).

Further, report inquiry systems that are designed to output a report and provide information about a report or the like to a mobile communication terminal (a mobile terminal) have been proposed (see Patent Literatures 2 and 3).

### Citation List

### Patent Literature

Patent Literature 1: JP 2002-312208 A
Patent Literature 2: JP 2003-323582 A
Patent Literature 3: JP 2007-200136 A

### Summary of Invention

### Technical Problem

In the ERP system according to the related art, data (including data input by the user and data calculated from various kinds of data) acquired in each business process is registered to each dedicated data table (table) and managed. In other words, in the ERP system according to the related art, a table to be updated differs according to an input process such as a received order or shipping instruction. Here, the "input process" refers to a process of inputting various kinds of data acquired (decided) by an administrator of the ERP system in each business process to each table.

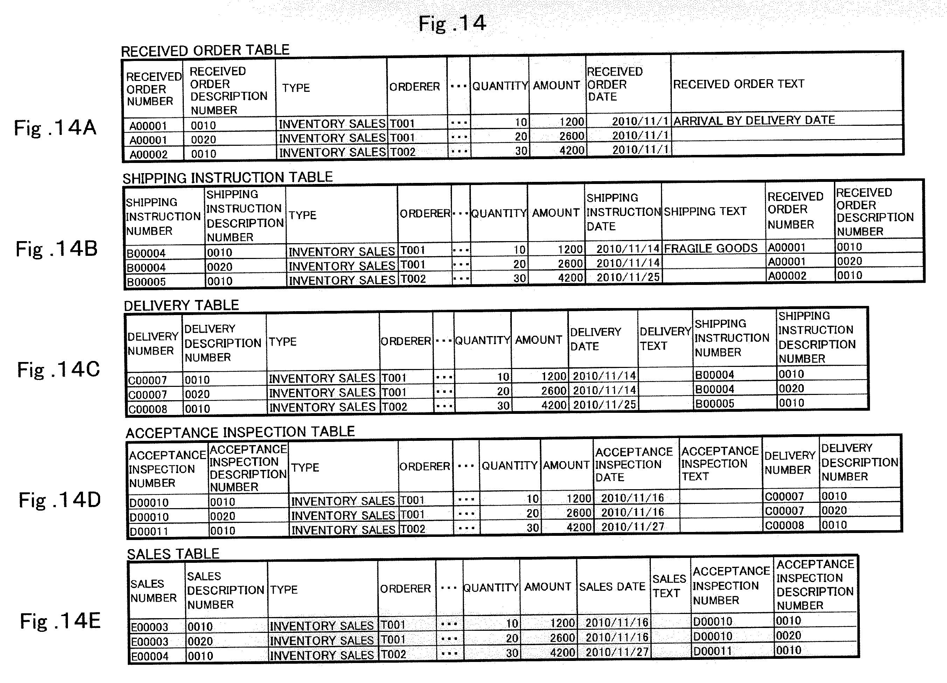

Figs. 14(A) to 14(E) are explanatory diagrams for describing an example of a table configuration in the ERP system according to the related art. For example, when a business flow (a process flow) configured with a plurality of business processes represents "inventory sales," there are five input processes of a received order, shipping instruction, delivery, acceptance inspection, and sales. In this case, as a table storing data related to the process flow of "inventory sales," five tables of a received order table, a shipping instruction table, a delivery table, an acceptance inspection table, and a sales table are used in the respective input processes, for example, as illustrated in Figs. 14(A) to 14(E).

In other words, in the ERP system according to the related art, a table to be updated differs according to an input process. For this reason, a correspondence between a plurality of business processes belonging to a single process flow is made by assigning an identifier (in Figs. 14(A) to 14(E), a received order number and a received order description in the shipping instruction table, a shipping instruction number and a shipping instruction description in the delivery table, or the like) to data (process data) related to each business process.

For this reason, in the ERP system according to the related art, it is necessary to specify a table according to the type of input process and to input an identifier of another corresponding process data for each input process. In other words, for example, in the example of Figs. 14(A) to 14(E), when process data related to a business process "shipping instruction" associated with process data (that is, various kinds of data stored in the same column as a received order number "A00001" and a received order description number "0010" in the received order table) specified by a received order number "A00001" and a received order description number "0010" is registered to a database included in the ERP system, it is necessary to register the received order number "A00001" and the received order description number "0010" to the shipping instruction table together with a shipping instruction number specifying process data, a shipping instruction description number, a type representing the type of business process, and data (for example, an orderer, a quantity, an amount, a shipping instruction date, and a shipping text) representing content of a business process, as process data related to a business process "shipping instruction." In this case, the same data (for example, an orderer, a quantity, or an amount) may be registered to a plurality of tables, and thus it is problematic from a point of view of an efficient data process.

Then, similarly to when data is registered, in the ERP system according to the related art, when various kinds of data stored in various tables are searched for at the user's request, for example, it is necessary to search for necessary process data by tracing an identifier of process data and to individually acquire data matching a search condition from various tables, and thus there is a problem in that a processing load required for a search excessively increases.

As described above in the ERP system according to the related art, when various kinds of data stored in various tables are searched for, a processing load is large, and when various kinds of information processing is performed by extracting various kinds of data, a processing load further increases, and thus there is a problem in that it is hard to rapidly output valid information by information processing.

Particularly, when information is provided according to a request from a mobile communication terminal (mobile terminal), a rapid response speed is required, and thus the above problem becomes remarkable.

In order to solve the above problems, it is an object of the present invention to reduce a processing load required for data processing in a business system and rapidly output valid information in a business system (an ERP system) that provides information about a report to a mobile communication terminal (mobile terminal).

### Solution to Problem

A mobile terminal management server of the present invention is a mobile terminal management server that is a server run by ERP and provides various kinds of data via a communication network according to a request from a mobile terminal used by a user, and includes a process flow data storage unit that stores process flow data including various kinds of data related to a process flow including a plurality of business processes, the process flow data is data including status data, common data, and process-specific data, the status data representing progress statuses of the plurality of business processes included in the process flow, the common data being common to business processes included in the same process flow, the process-specific data being specific to each business process included in the same process flow, the process flow data including inventory-related data including quantity data representing a quantity related to an inventory of a product, a condition designation screen providing unit that provides a condition designation screen used to designate a search condition according to a request from the mobile terminal, a search condition accepting unit that receives and accepts the search condition designated through the condition designation screen from the mobile terminal, an inventory-related data extracting unit that extracts inventory-related data including an item related to inventory management of a product represented by the search condition accepted by the search condition accepting unit from the process flow data stored in the process flow data storage unit, an inventory management information generating unit that generates inventory management information including inventory transition of the product represented by the designated search condition based on the inventory-related data, and an inventory management information providing unit that provides the inventory management information generated by the inventory management information generating unit to the mobile terminal.

Through the above configuration, in a business system that provides information related to a report to a mobile communication terminal, it is possible to reduce a processing load required for data processing in the business system and rapidly output valid information.

The mobile terminal management server may further include a quantity data registering unit that specifies quantity data related to a business process and registers the specified quantity data as the process flow data when report data of a business process of a manufacturing warehousing schedule, a manufacturing delivery schedule, warehousing, or a delivery is registered as the process flow data.

The quantity data may be configured to include a scheduled warehousing quantity, a scheduled delivery quantity, an actual warehousing quantity, and an actual delivery quantity.

The inventory management information may be configured to include item goods, a required date, a scheduled warehousing quantity, a scheduled delivery quantity, an actual warehousing quantity, an actual delivery quantity, and inventory transition.

Further, a mobile terminal management program of the present invention is a mobile terminal management program that operates ERP and causes a mobile terminal management server to execute a process of providing various kinds of data via a communication network according to a request from a mobile terminal used by a user, the mobile terminal management server including a process flow data storage unit that stores process flow data including various kinds of data related to a process flow including a plurality of business processes, the process flow data is data including status data, common data, and process-specific data, the status data representing progress statuses of the plurality of business processes included in the process flow, the common data being common to business processes included in the same process flow, the process-specific data being specific to each business process included in the same process flow, the process flow data including inventory-related data including quantity data representing a quantity related to an inventory of a product, and the mobile terminal management program causes the mobile terminal management server to execute a condition designation screen providing process of providing a condition designation screen used to designate a search condition according to a request from the mobile terminal, a search condition accepting process of receiving and accepting the search condition designated through the condition designation screen from the mobile terminal, an inventory-related data extracting process of extracting inventory-related data including an item related to inventory management of a product represented by the search condition accepted in the search condition accepting process from the process flow data stored in the process flow data storage unit, an inventory management information generating process of generating inventory management information including inventory transition of the product represented by the designated search condition based on the inventory-related data, and an inventory management information providing process of providing the inventory management information generated in the inventory management information generating process to the mobile terminal.

### Advantageous Effects of Invention

According to the present invention, it is possible to reduce a processing load required for data processing in a business system and rapidly output valid information in a business system (an ERP system) that provides information about a report to a mobile communication terminal.

### Brief Description of Drawings

Fig. 1 is a block diagram illustrating a configuration example of a report inquiry system.
Fig. 2 is a block diagram illustrating a configuration example of a mobile terminal management server.
Fig. 3 is an explanatory diagram illustrating an example of a storage state of process flow data.
Fig. 4 is an explanatory diagram illustrating an example of inventory-related data.
Fig. 5 is a flowchart illustrating an example of a slip data providing process.
Fig. 6 is an explanatory diagram illustrating an example of a menu screen.
Fig. 7 is an explanatory diagram illustrating an example of a slip search screen.
Fig. 8 is an explanatory diagram illustrating an example of a slip search screen.
Fig. 9 is an explanatory diagram illustrating an example of an overall configuration of a selection item arrangement circle displayed on the slip search screen.
Fig. 10 is an explanatory diagram illustrating an example of a search result list display screen.
Fig. 11 is a flowchart illustrating of an example of an inventory management information providing process.
Fig. 12 is an explanatory diagram illustrating an example of a condition designation screen.
Fig. 13 is an explanatory diagram illustrating an example of an inventory management information display screen.
Figs. 14(A) to 14(E) are explanatory diagrams for describing an example of a table configuration in an ERP system according to a related art.

### Mode for Carrying Out the Invention

Hereinafter, an embodiment of the present invention will be described with reference to the accompanying drawings.

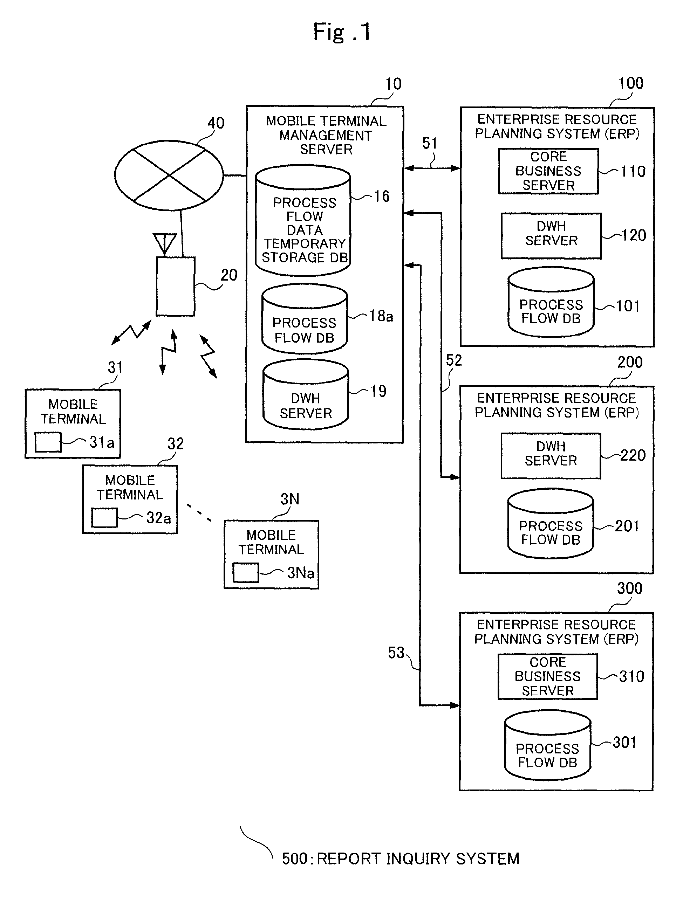

Fig. 1 is a block diagram illustrating a configuration example of a report inquiry system 500 according to an embodiment of the present invention. As illustrated in Fig. 1, the report inquiry system 500 includes a mobile terminal management server 10, a relay 20, a plurality of mobile terminals 31 to 3N (N is an arbitrary positive integer), an enterprise resource planning system 100, an enterprise resource planning system 200, and an enterprise resource planning system 300.

The mobile terminal management server 10 is connected with each of the mobile terminals 31 to 3N via a communication network 40 such as the Internet and the relay 20. The mobile terminal management server 10 is connected with the enterprise resource planning system 100, the enterprise resource planning system 200, and the enterprise resource planning system 300 via communication networks 51, 52, and 53 such as a LAN (Local Area Network) or a dedicated communication line, respectively. Further, the mobile terminal or the enterprise resource planning system may be configured to communicate with another mobile terminal or another enterprise resource planning system via the mobile terminal management server, or the mobile terminal or the enterprise resource planning system may be configured not to communicate with another mobile terminal or another enterprise resource planning system.

The enterprise resource planning system 100 includes a core business server 110, a data warehouse server (DWH server) 120, and a process flow DB 101. The enterprise resource planning system 200 includes a DWH server 220 and a process flow DB 201. The enterprise resource planning system 300 includes a core business server 310 and a process flow DB 301.

Each of the plurality of the enterprise resource planning systems 100, 200, and 300 which differ in configuration fulfills a functions of an enterprise resource planning system by performing communication (transmission and reception of various kinds of information) with the mobile terminal management server 10 according to the need (that is, according to its function). In other words, in the report inquiry system, the system 200 having no core business server or the system 300 having no DWH server can also fulfill the function of the enterprise resource planning system by performing communication with the mobile terminal management server 10. Even though not illustrated, the system having no process flow DB can also fulfill the function of the enterprise resource planning system by storing process flow data in the mobile terminal management server 10. Since a well-known technique is used for the core business server or the like included in each core business system, the following description will be made using the enterprise resource planning system 100 as an example.

The core business server 110 is connected with the DWH server 120 through a dedicated communication line.

The core business server 110 is a server managed, for example, by the administrator of the report inquiry system 500, and has various functions of managing report information related to various businesses (for example, functions of generating, updating, and holding information). The core business server 110 is configured with a general information processing device including an OS (Operating System) and a relational DB.

Here, the report is the general term of books and a type of slip. Further, the books denote one in which matters concerning receipts and expenditure of money or goods are filled, and the "slip" denotes one that is data to become a basis when creating books and constitutes evidence of transactions and the like on a business. In the present embodiment, the case where the core business server 110 deals with the process data representing only the slip data as report data will be described as an example.

The core business server 110 executes various kinds of processing according to a business application program. Examples of the business application program include a sales business management program, a purchase business management program, a production management program, a financial accounting management program, and a managerial accounting management program.

The DWH server 120 is a server managed, for example, by the system administrator of the present system, and includes various functions of implementing a data warehouse. Here, the "data warehouse" denotes a system that analyzes relevance between respective items from among business data such as report data accumulated in time series. Further, the DWH server 120 has a function of converting a file of a CSV (Comma Separated Values) format transferred from the core business server 110 into a predetermined data format and the like and registering various kinds of data to a predetermined storage region. Further, the DWH server 120 may be configured to extract data corresponding to each storage region from a state of CSV format without carrying out data format conversion.

The process flow DB 101 is a storage medium that stores process flow data configured with various kinds of process data (or report data) collected and marshaled by means of various kinds of information processing using various kinds of programs stored in the business application program DB (not illustrated) of the core business server 110. The process flow data will be described in detail later. In the present embodiment, the enterprise resource planning system 100 includes a business related data DB (not illustrated) managed by the DWH server 120, and the core business server 110 has a function of converting process data stored in the process flow DB 101 into a CSV (Comma Separated Values) format according to a predetermined extraction condition and transmitting the process data to the mobile terminal management server 10. In the present embodiment, the core business server 110 transfers a data file whose format is converted to CSV format by an FTP (File Transfer Protocol) to the mobile terminal management server 10.

The mobile terminal management server 10 is a server which is run by ERP and provides various kinds of data through a communication network according to a request from a mobile terminal used by the user. For example, the mobile terminal management server 10 is configured with an information processing device such as a WWW server, and managed by the system administrator of the report inquiry system 500.

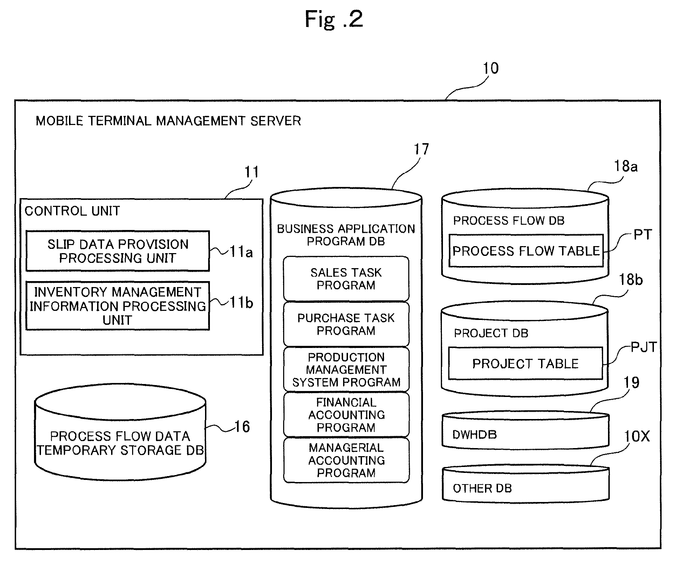

Fig. 2 is a block diagram illustrating a configuration example of the mobile terminal management server 10. As illustrated in Fig. 2, the mobile terminal management server 10 includes a control unit 11 that performs various kinds of control, a process flow data temporary storage DB 16, a business application program DB 17, a process flow DB 18a, a project DB 18b, a DWH DB 19, and the other DB 10X that stores various kinds of data (for example, data used by various kinds of programs stored in the business application program DB 17) necessary to implement the function of the general core business server. The other DB 10X has a portion which does not specifically relate to the present invention, and thus a detailed description thereof will not be made. The control unit 11 includes a slip data provision processing unit 11a that executes, for example, a process of providing process flow data to the mobile terminals 31 to 3N and an inventory management information processing unit 11b that executes, for example, a process of providing inventory management information to the mobile terminals 31 to 3N.

The process flow data temporary storage DB 16 is a storage medium that temporarily stores process flow data acquired from the enterprise resource planning system 100 side or process flow data stored in the process flow DB 18a. The process flow data stored in the process flow data temporary storage DB 16 is updated, for example, at regular intervals (for example, at one-day intervals, at three-day intervals, or at 12-hour intervals).

The business application program DB 17 is a storage medium that stores a program used for various kinds of businesses. Examples of the program stored in the business application program DB 17 include a sales business management program, a purchase business management program, a production management program, a financial accounting management program, and a managerial accounting management program.

The process flow DB 18a is a storage medium that stores process flow data configured with various kinds of process data (or report data) collected and marshaled by means of various kinds of information processing using various kinds of programs stored in the business application program DB 17. In the present embodiment, the description will proceed in connection with an example in which process flow data including various kinds of data related to a process flow including a plurality of business processes is stored in a process flow table PT in the process flow DB 18a. Further, in the present embodiment, the description will proceed in connection with an example in which the mobile terminal management server 10 centrally manages process flow data generated in each process flow through the single process flow table PT. Further, in the present embodiment, the process flow data is assumed to include usually used slip data (for example, data in which received order slip header information, received order slip description information, delivery date schedules, and the like are associated with slip data corresponding to a received order slip, and which is stored with the structure which is retrievable based on a key such as a slip number. Here, the slip number includes a received order number, a purchase order number, a shipping number, an acceptance or delivery numbers, a bill reference, a billing number, an accounting number, and the like.).

Further, the mobile terminal management server 10 may be configured to manage process flow data through a plurality of tables, for example, for each type which will be described later or for each one in which a part (for example, an orderer) of content of common data, which will be described later, is the same.

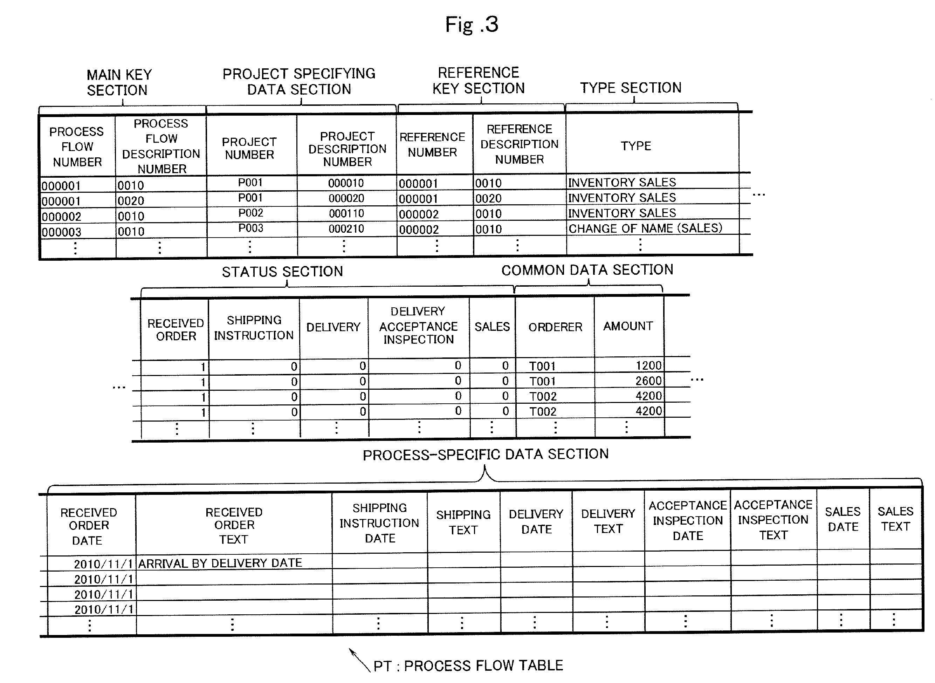

Fig. 3 is an explanatory diagram illustrating an example of a storage state of process flow data in the process flow DB 18a. As illustrated in Fig. 3, process flow data according to the present embodiment includes a main key section, a project specifying data section, a reference key section, a type section, a status section, a common data section, and a process-specific data section. Each item (that is, a column item in the process flow table PT) corresponding to each section of the process flow data represents the type of process data configuring the process flow data. In other words, data related to the business processes configuring the process flow is stored to be assigned to the respective sections configuring the process flow data. Further, process data related to one process flow (a series of process flow from a received order from a certain company to deliver) is stored in the same entry in the process flow table PT (that is, the same row in the process flow table PT). Through this configuration, a correspondence relation between respective pieces of process data can be defined.

Here, the "main key section" refers to a part in which main key data which is data to uniquely specify process flow data among pieces of process flow data is stored. In the present embodiment, the main key section is configured with a process flow number and a process flow description number. In other words, in the present embodiment, a combination of the process flow number and the process flow description number serves as an identifier (ID) of each process flow data. The main key section is updated at the time of initial registration of process flow data. Here, the "time of initial registration of process flow data" refers to when an entry (data row) is added to the process flow data, for example, when another corresponding process data which belongs to a certain process flow but is not registered yet is registered. Here, "update" is assumed to include addition of data.

Further, the "process flow number" is an identifier to specify one process flow data (that is, a first column in the process flow table PT illustrated in Fig. 3). The process flow number is assigned to each process data which is the same in predetermined item. In the present embodiment, the same process flow number is assigned to process flow data which is the same in the type and the orderer of the process flow data.

Further, the "process flow description number" is an identifier specifying specific process flow data among pieces of process flow data to which the same process flow number is assigned. In other words, for example, the process flow table PT illustrated in Fig. 3 can uniquely specify process flow data including process data representing that an order for a business of the amount "1200" and "2600" is received from an orderer "T001" by a combination of the process flow number "000001" and the process flow description number "0010" or "0020" in the business process "received order" in the type "inventory sales" of the process flow.

The "project specifying data section" is a part in which main key data serving as data specifying a project among pieces of process flow data is stored. In the present embodiment, the project specifying data section includes a project number and a project description number. In other words, in the present embodiment, a project and a description thereof can be specified by a combination of a project number and a project description number. In the present embodiment, when an entry (data row) is added to process flow data, a project number and a project description number are designated, and thus an entry is added such that a project and a project description to which an entry belongs can be specified.

The "project number" is an identifier identifying a single project. For the same project, the same project number is used. The "project description number" is an identifier identifying a description of each business unit configuring a project. Thus, each of the project description numbers associated with the same project number is an identifier identifying a description of each business unit (for example, cladding or power facility) configuring the same project (for example, dam construction). Further, data (data of the same row) such as the common data section associated with the same project description number is data identifying a description of the same business.

Next, the "reference key section" is a part in which reference key data which is data to specify another process flow data (or another process data) related to the process flow such as original transaction on sales returns among pieces of process flow data is stored. In the present embodiment, the reference key section is configured with a reference number and a reference description number, and is updated at the time of initial registration of process flow data.

The process flow number and the process flow description number of another process flow related to the process flow are stored in the reference number and the reference description number, respectively. However, when there is no other process flow related to the process flow such as a new transaction, data representing the same value as the main key section of the same entry is stored in the reference key section (that is, the process flow number and the process flow description number are stored in the reference number and the reference description number, respectively). Further, when the reference key section represents another process data related to the process flow, data specifying the type of process data is further stored in the reference key section.

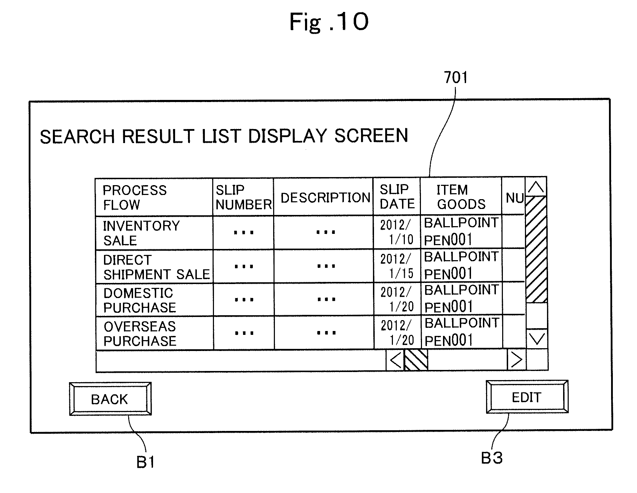

The "type section" is a part in which type data which is data representing the type of process flow such as inventory sales or sample shipping among pieces of process flow data is stored. The type section is updated at the time of initial registration of process flow data. The type of process flow is not limited to inventory sales or sample shipping. Further, it is assumed that a necessary process is decided in advance depending on the type of the process flow (that is, the type of business process or the number of business processes to be included differ according to type of process flow). Further, two or more other types of process flows will be provided later (see Fig. 10).

The "status section" is a part in which status data which is data (data representing a progress status of each of a plurality of business processes included in the process flow) representing the progress of the process flow among pieces of process flow data is stored. In the present embodiment, the status data represents the progress of each business process by setting "0" to an unfinished process and "1" to a finished process on a business process needed by the process flow. In other words, for example, as illustrated in Fig. 3, it is assumed that when the process flow relates to "inventory sales" and the process flow includes business processes of "received order," "shipping," "delivery," "delivery acceptance inspection," and "sales," process specific data (for example, a received order date) related to the business process "received order" is registered. In this case, in the status data, a part corresponding to "sales" becomes "1," and the remaining parts remain in an initial state (that is, a state set to "0").

In other words, the status section in the present embodiment is updated for each business process. In other words, the status section is updated when process specific data which will be described later is input, specifically, when it is determined that each business process is completed as a predetermined status change condition is satisfied. The status change condition is not specially limited, and in the present embodiment, it is assumed that "what all process specific data corresponding to one business process is input" remains stored in a predetermined storage region of the mobile terminal management server 10 as the status change condition.

In the present embodiment, since the process flow of a different type is stored in the same table, a part that stores process data unnecessary for a specific process flow may exist among items (column items) configuring a table. In this case, it is assumed that in the process flow table, a part storing unnecessary process data becomes null data, and "0" is stored in the status data corresponding to the null data.

The "common data section" is a part in which common data which is data (that is, data which is common between the business processes included in the same process flow) not relying on the business process such as an orderer and a ship-to party among pieces of process flow data is stored. The common data section is updated at the time of initial registration of process flow data.

The "process-specific data section" is a part in which process specific data which is data specific to each business process included in the same process flow such as the received order date or data (for example, text data representing a precaution such as "arrival by delivery date" or "fragile goods (handle with care)" registered in each business process among pieces of process flow data is stored. The process specific data section is updated for each business process. Thus, in the present embodiment, among pieces of process flow data, data relying on the business process is referred to as "process specific data," and data not relying on the business process is referred to as "common data."

The process flow data according to the present embodiment has been described so far, and a definition of various terms illustrated in Fig. 3 will be briefly described below.

First, the "received order" refers to a state in which an order has been received from a customer, and a contract with the customer has been made. The "shipping instruction" refers to a state in which an instruction to ship a product has been given to a warehouse man or a person in charge of physical distribution. The "delivery" refers to a state in which a product has been shipped from a warehouse and then started to be delivered. The "acceptance inspection" refers to a state in which a customer has completed an acceptance inspection and an ownership of a product has been transferred to the customer. The "sales" refers to a state in which an acceptance inspection of a customer has been checked and a debt amount on a customer has been fixed (that is, a debt has been recorded).

The term "acceptance inspection" is also used to mean "business of inspecting whether or not goods for supply or services satisfy an ordered specification (that is, a quantity, a color, a shape, and a quality)" or that "an ownership of an asset is transferred when an acceptance inspection is completed." Further, in financial accounting (or institutional accounting) or on the ERP system, in order to explicitly specify a transfer timing of an ownership of an asset, an event of "acceptance inspection" is defined to be distinguished from delivery.

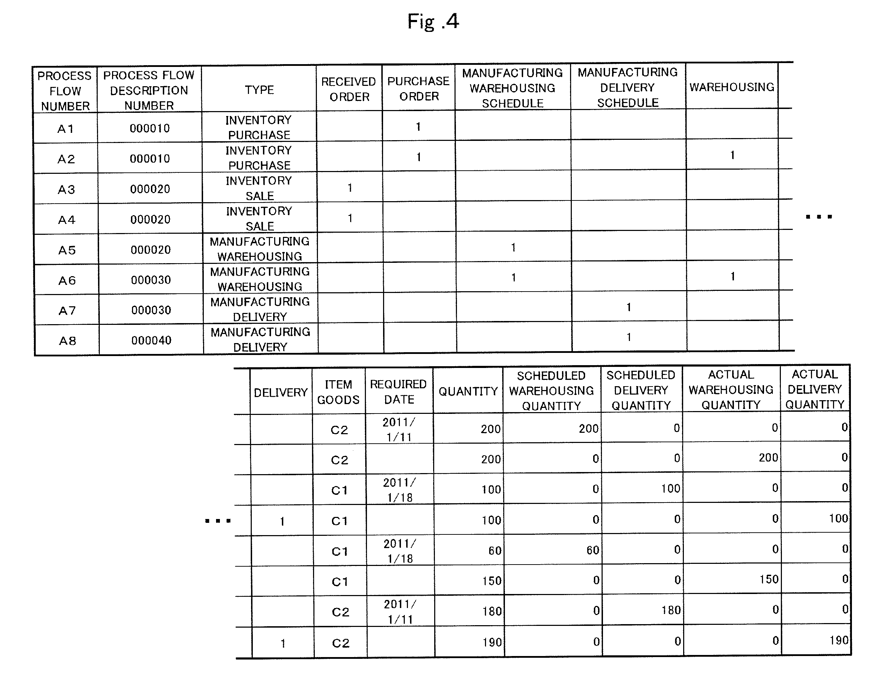

Fig. 4 is an explanatory diagram illustrating an example of inventory-related data including an item related to inventory management among pieces of the process flow data. The inventory-related data is data in which a process flow number, a process flow description number, a received order, a purchase order, a manufacturing warehousing schedule, a manufacturing delivery schedule, warehousing, delivery, item goods, a required date, a quantity, a scheduled warehousing quantity, a scheduled delivery quantity, an actual warehousing quantity, and an actual delivery quantity are associated. In the present embodiment, when slip data of a manufacturing warehousing schedule, a manufacturing delivery schedule, warehousing, or a delivery-related business process is registered as the process flow data, the mobile terminal management server 10 performs a process of specifying quantity data such as a scheduled warehousing quantity, a scheduled delivery quantity, an actual warehousing quantity, or an actual delivery quantity and registering the specified quantity data such as the scheduled warehousing quantity, the scheduled delivery quantity, the actual warehousing quantity, or the actual delivery quantity as the process flow data as well.

The project DB 18b is a storage medium that stores project schedule data representing a business schedule of each project. In the present embodiment, in the project DB 18b, the project schedule data representing the business schedule of each project is stored in a project table PJT. Even though not illustrated, the project schedule data in which information representing a business schedule (for example, a schedule of a budget, a purchase, received order, a purchase order, and the like) for achieving a corresponding business is associated with, for example, a project number and a project description number is assumed to be registered in the project table PJT.

The mobile terminal management server 10 has a function of providing various kinds of data stored in the process flow DB 18a, the project DB 18b, the DWH DB 19, and the other DB 10X according to a request from a predetermined external device, that is, requests from the mobile terminals 31 to 3N and the enterprise resource planning systems 100, 200, and 300 in the present embodiment. In other words, the mobile terminal management server 10 has a function as the core business server. In other words, the mobile terminal management server 10 includes an ERP engine.

Even though not illustrated, in the present embodiment, the mobile terminal management server 10 is assumed to have a function as a DWH server having various functions of implementing a data warehouse. As the mobile terminal management server 10 has a structure of functioning as the ERP engine and the DWH server, it is possible to provide information requested as the enterprise resource planning system to the enterprise resource planning systems having different configurations (for example, the enterprise resource planning system 100 including both the core business server and the DWH server, the enterprise resource planning system 200 including only the DWH server, and the enterprise resource planning system 300 including only the DWH server).

Each of the mobile terminals 31 to 3N is an information processing device, such as iPad (registered trademark), which includes a central processing unit (CPU), a read only memory (ROM), a random access memory (RAM), and a display unit. In the present embodiment, each of the mobile terminals 31 to 3N is assumed to include various kinds of usable applications to deal with report data, such as a WEB browser. In the present embodiment, for example, each of the mobile terminals 31 to 3N has a function of defining a query (a search item, a search key, an extraction key, and the like) used to acquire necessary report data (process flow data and project schedule data in the present embodiment) from the mobile terminal management server 10 according to an operation performed by the user, and transmitting the query to the mobile terminal management server 10. The mobile terminals 31 to 3N are assumed to include code readers (or code reader functions) 31a to 3Na that read various kinds of codes such as a quick response (QR) code (registered trademark), respectively.

In the present embodiment, each of the mobile terminals 31 to 3N has a function of communicating with the mobile terminal management server 10 through the relay 20 and the communication network 40 and outputting data acquired from the mobile terminal management server 10 to a display unit through a function of software such as a predetermined Web application (a WEB browser).

Next, a process of updating the process flow data stored in the process flow data temporary storage DB 16 will be described. In the present embodiment, when a data update timing (for example, a predetermined timing (for example, at 2:00 am) when an update is performed everyday) comes, the mobile terminal management server 10 reads the process flow data (latest data) stored in the process flow DB 18a included in the mobile terminal management server 10, stores (newly stores or overwrites) the process flow data in a predetermined storage region of the process flow data temporary storage DB 16, and updates storage information of the process flow data temporary storage DB 16. Thus, the storage information of the process flow data temporary storage DB 16 is updated by a batch process.

Next, an operation of the report inquiry system 500 according to the present embodiment will be described with reference to the accompanying drawings. Here, a description of an operation or process which does not specially relate to the present invention may not be made.

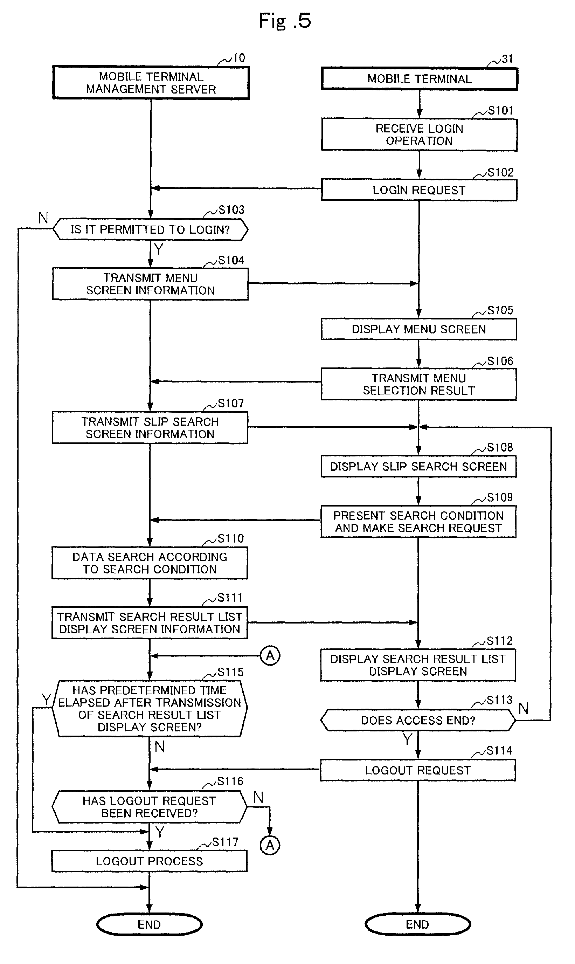

Fig. 5 is a flowchart illustrating an example of a slip data providing process executed, for example, by the mobile terminal management server 10 in the report inquiry system 500 according to the present embodiment. Here, the description will proceed in connection with an example in which the mobile terminal management server 10 provides the process flow data according to a request from a mobile terminal 31 used by a user X.

In the slip data providing process, first, the mobile terminal 31 receives a login request by the user X's login operation (step S101). The login operation refers to, for example, an input operation of a previously set secret number. Here, when the login to the mobile terminal 31 is permitted, it is permitted to make various kinds of operations for using various kinds of functions included in the mobile terminal 31.

In a state in which the user X logs in the mobile terminal 31, when the user X executes a predetermined login operation, the mobile terminal 31 accesses the mobile terminal management server 10, acquires a login screen, designates information (for example, a user ID and a password which are previously set) necessary to login on the login screen, and makes a login request (step S102). For example, the login request is made such that predetermined information (for example, an electronic certificate issued to the user X) used for a predetermined login determination is provided in addition to the user ID and the password. Further, when the operation to login the mobile terminal management server 10 is performed, the user X may be requested to designate a language (for example, Japanese) used in a group to which the user belongs or various kinds of screens.

Upon receiving the login request, the mobile terminal management server 10 determines whether or not it is permitted to log in (step S103). For example, the determination may be made based on an ID, a password, an electronic certificate, and the like.

When it is determined that it is permitted to login (Y in step S103), the mobile terminal management server 10 sets the mobile terminal 31 to a login state. When the mobile terminal 31 is set to a login state, the mobile terminal management server 10 transmits menu screen information representing a menu screen to the mobile terminal 31 (step S104). However, when it is determined that it is not permitted to login (N in step S103), the mobile terminal management server 10 ends the slip data providing process without setting the mobile terminal 31 to the login state. Further, when it is determined that it is not permitted to login, the mobile terminal management server 10 performs a process of notifying the mobile terminal 31 of login refusal.

Upon receiving the menu screen information, the mobile terminal 31 causes the menu screen represented by the received menu screen information to be displayed on the display unit included in the mobile terminal 31 (step S105).

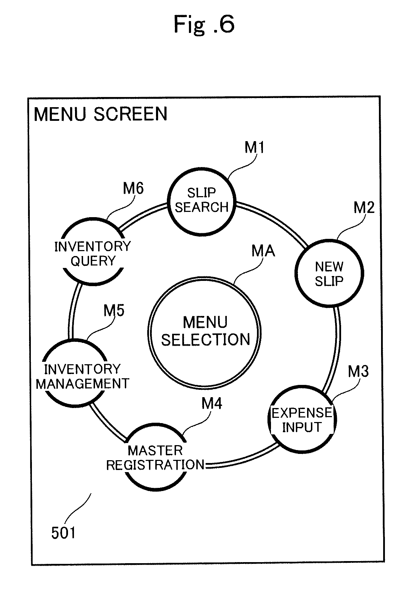

Fig. 6 is an explanatory diagram illustrating an example of a menu screen. As illustrated in Fig. 6, a menu arrangement circle display region 501 is provided on the menu screen. A menu arrangement circle MC in which menu buttons M1 to M6 on which a plurality of selectable menu names are displayed are arranged substantially on the circumference thereof is displayed on the menu arrangement circle display region 501. Further, a title display region MA on which the title of the menu arrangement circle MC disposed on the central region of the circle formed by the menu arrangement circle MC is displayed is provided on the menu arrangement circle display region 501 as illustrated in Fig. 6. Here, as the menu buttons M1 to M6, a slip search button M1 pushed down to search for a slip, a new slip button M2 pushed down to newly create a slip, an expense input button M3 pushed down to input expense, a master registration button M4 pushed down to register a master, an inventory management button M5 pushed down, for example, to make a project management information provision request or the like, and an inventory query button M6 pushed down to query inventory information are provided.

In the menu screen displayed on the display unit of the mobile terminal 31 in which a touch panel is arranged, the user X pushes down any one of the menu buttons M1 to M6 through a touch operation (a contact operation by a finger). In the present embodiment, the slip search button M1 is assumed to be pushed down. Here, a description of the process when the other menu buttons M2 to M6 are pushed down will not be made.

When the slip search button M1 is pushed down in the menu screen, the mobile terminal 31 transmits information representing that the slip search button M1 has been pushed down to the mobile terminal management server 10 as a menu selection result (step S106).

Upon receiving the fact that the slip search button M1 is pushed down as the menu selection result, the slip data provision processing unit 11a of the mobile terminal management server 10 transmits the slip search screen information representing the slip search screen for designating a slip search condition to the mobile terminal 31 (step S107).

Upon receiving the slip search screen information, the mobile terminal 31 causes the slip search screen represented by the received slip search screen information to be displayed on the display unit included in the mobile terminal 31 (step S108).

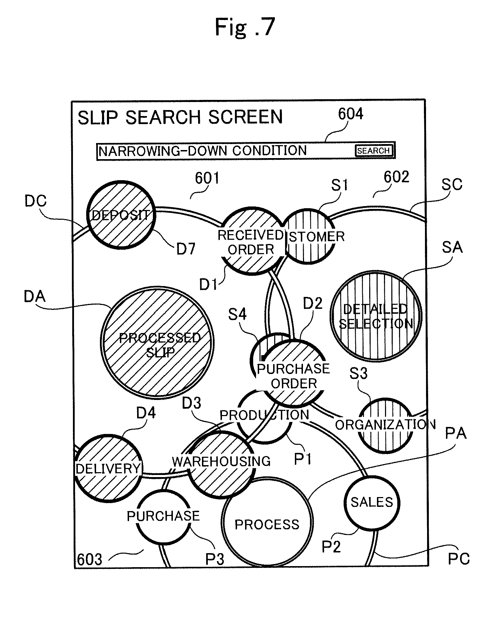

Fig. 7 is an explanatory diagram illustrating an example of a slip search screen. As illustrated in Fig. 7, the slip search screen is provided with a plurality of selection item arrangement circle display regions 601, 602, and 603 to respectively display a plurality of selection item arrangement circles DC, SC, and PC on which a plurality of selection items selectable to designate a search condition are arranged substantially on the circumference thereof, and a keyword input region 604 to input a keyword to be used as a narrowing-down condition. In the present embodiment, as the selection item arrangement circles DC, SC, and PC, a processed slip type selection item arrangement circle DC on which the type of processed slip is selectably displayed, a detailed selection type selection item arrangement circle SC in which the title of a detailed item for narrowing-down is selectably displayed, and a process type selection item arrangement circle PC in which the type of business process is selectably displayed are provided. Further, as the selection item arrangement circle display regions 601, 602, and 603, a processed slip type selection item arrangement circle display region 601 to display the processed slip type selection item arrangement circle DC, a detailed selection type selection item arrangement circle display region 602 to display the detailed selection type selection item arrangement circle SC, and a process type selection item arrangement circle display region 603 to display the process type selection item arrangement circle PC are provided.

The processed slip type selection item arrangement circle DC is provided with seven types of selection items (selection item buttons) to select a slip, which are arranged substantially on the circumference thereof. That is, the processed slip type selection item arrangement circle DC is provided with a received order button D1 to designate a received order slip as the search condition, a purchase order button D2 to designate a purchase order slip as the search condition, a warehousing button D3 to designate a warehousing slip as the search condition, a delivery button D4 to designate a delivery slip as the search condition, a sales button D5 to designate a sales slip as the search condition, a billing button D6 to designate a billing slip as the search condition, and a deposit button D7 to designate a deposit slip as the search condition. Further, a classification display button DA on which a classification name "processed slip" is displayed is arranged on the central region of the processed slip type selection item arrangement circle DC. In the present embodiment, the corresponding type of slip can be searched for by selecting the selection items (selection item buttons) D1 to D7 (by selecting one or more buttons).

The detailed selection type selection item arrangement circle SC is provided with four types of selection items (selection item buttons) to select detailed narrowing-down condition items, which are arranged substantially on the circumference thereof. That is, the detailed selection type selection item arrangement circle SC is provided with a customer button S1 to designate a customer as the search condition, a vendor button S2 to designate a vendor as the search condition, an organization button S3 to designate an organization as the search condition, and an item goods button S4 to designate item goods as the search condition. Further, a classification display button SA on which a classification name "detailed selection" is displayed is arranged on the central region of the detailed selection type selection item arrangement circle SC. In the present embodiment, when the selection items (selection item buttons) S1 to S4 (one or more buttons may be selected) are selected, a detailed narrowing-down condition designation screen (not illustrated) to designate a concrete narrowing-down condition is displayed, and a concrete narrowing-down condition (for example, which corresponds to a vendor company name when the customer button S1 is selected, an item goods number when the item goods button S4 is selected, and the like) can be designated through the detailed narrowing-down condition designation screen. The slip satisfying the designated narrowing-down condition can be searched for by selecting the concrete narrowing-down condition (one or more concrete narrowing-down conditions may be selected).

The process type selection item arrangement circle PC is provided with three types of selection items (selection item buttons) to select the business process, which are arranged substantially on the circumference thereof. That is, the process type selection item arrangement circle PC is provided with a production button P1 to designate "production" in the business process as the search condition, a sales button P2 to designate "sales" in the business process as the search condition, and a purchase button P3 to designate "purchase" in the business process as the search condition. Further, a classification display button PA on which a classification name "process" is displayed is arranged on the central region of the process type selection item arrangement circle PC. In the present embodiment, a slip related to a business process of a corresponding type can be searched for by selecting the selection items (selection item buttons) P1 to P3 (one or more selection item buttons may be selected).

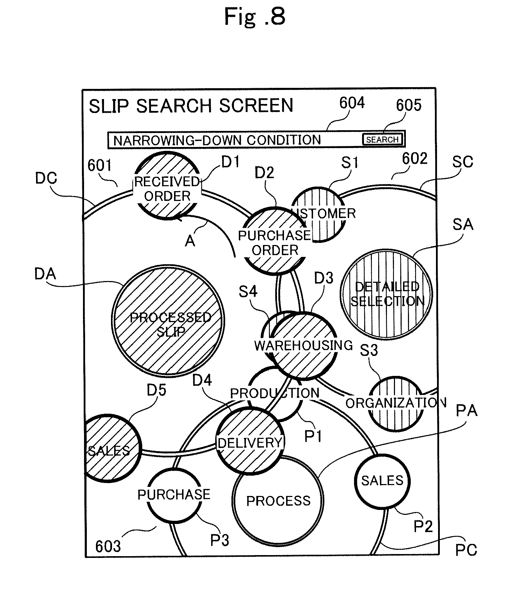

In the present embodiment, when the classification display button DA, SA, or PA is pushed down, a rendering operation of rotating the corresponding selection item arrangement circle DC, SC, or PC is executed. In other words, in the present embodiment, a selection item rotation rendering setting (a setting by a computer program) is made on the selection item arrangement circle display regions 601, 602, and 603 in the slip search screen so that a selection item rotation rendering operation of causing a plurality of selection items in the corresponding selection item arrangement circle DC, SC, or PC to rotationally move on the circumference can be executed according to a predetermined rotation instruction operation (an operation of pushing down the classification display button DA, SA, or PA) of the mobile terminal 31 by the user X. Specifically, in the screen state illustrated in Fig. 7, for example, when the classification display button DA is pushed down, a selection item rotation rendering operation of causing a plurality of selection items in the selection item arrangement circle DC to rotate on the circumference counterclockwise (in a direction A in Fig. 8) is executed. In this case, the rotation direction may be changed according to a predetermined rotation direction change operation by the user X (an operation of touching a portion of the screen with a finger near a location at which the circle formed by the selection item arrangement circle DC is displayed and sliding the finger in a new rotation direction). Further, when the classification display button DA, SA, or PA is pushed down again, it is desirable to end the selection item rotation rendering operation.

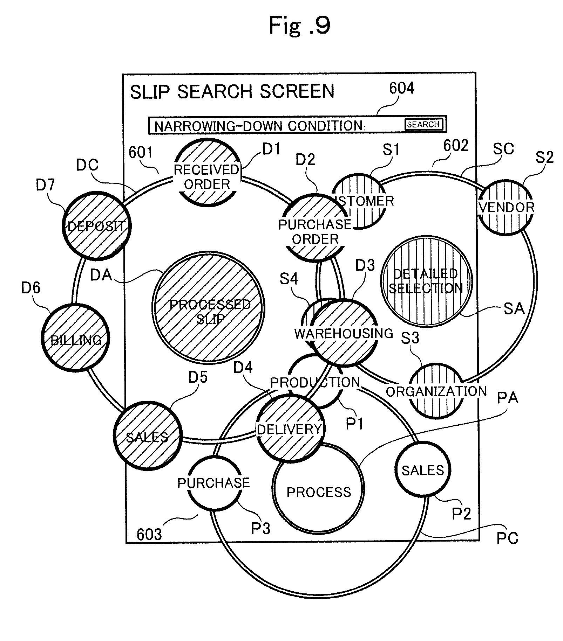

Since the selection item rotation rendering operation is performed as described above, as illustrated in Fig. 9, it is unnecessary to arrange all of the selection item arrangement circles DC, SC, and PC within the screen, and even when some of the selection items arranged in each of the selection item arrangement circles DC, SC, and PC are not displayed on the screen, all of the selection items can be sequentially displayed by rotating the selection item arrangement circles DC, SC, and PC. Further, since it is unnecessary to simultaneously display all of the selection items arranged in each of the selection item arrangement circles DC, SC, and PC within one screen, the display size of each selection item can be increased. Further, when the screen size is large, a configuration capable of simultaneously displaying all of the selection items within one screen may be provided.

In present embodiment, the selection items arranged in the selection item arrangement circles DC, SC, and PC are displayed in a circular frame. However, some or all of the selection items may be displayed in a frame of any other shape such as a rectangular shape, a triangular shape, and a star shape. Further, each selection item arranged in each of the selection item arrangement circles DC, SC, and PC is an example, and may be another selection item.

In the example illustrated in Fig. 7, the slip search screen is configured to include the three selection item arrangement circle display regions 601, 602, and 603. However, a single selection item arrangement circle display region may be provided, and two or three or more selection item arrangement circle display regions may be provided.

In the example illustrated in Fig. 7, the selection item arrangement circle display regions 601, 602, and 603 are provided to partially overlap one another, and the selection items (selection item buttons) arranged in each of the selection item arrangement circles DC, SC, and PC displayed on each of the selection item arrangement circle display regions 601, 602, and 603 are configured to have a display form (for example, to differ in a color) that differs according to each of the selection item arrangement circles DC, SC, and PC. However, any method may be used to the extent of the different display form, and a display form may be changed by changing the shape or form.

In the slip search screen, the user X selects each selection item arranged in each of the selection item arrangement circles DC, SC, and PC by the touch operation. Specifically, the type of slip which is a search target is selected by selecting any one of the selection items (selection item buttons) D1 to D7 arranged in the processed slip type selection item arrangement circle DC. Further, in the slip search screen, the user X selects the title of a detailed item for narrowing-down by selecting any one of the selection items (selection item buttons) S1 to S4 arranged in the detailed selection type selection item arrangement circle SC. When any one of the selection items (selection item buttons) S1 to S4 is selected, a detailed search condition is designated by inputting a concrete narrowing-down condition on the detailed narrowing-down condition designation screen. Further, in the slip search screen, the user X selects the type of business process which is a search target by selecting any one of the selection items (selection item buttons) P1 to P3 arranged in the process type selection item arrangement circle PC. Furthermore, in the slip search screen, the user X designates a search keyword by inputting a keyword to be used as the narrowing-down condition in the keyword input region 604.

In the present embodiment, when the user X selects the item goods S4 among the selection items (selection item buttons) S1 to S4 arranged in the detailed selection type selection item arrangement circle SC in the slip search screen, the mobile terminal 31 causes the detailed narrowing-down condition designation screen including the item goods input region to be displayed on the display unit of the mobile terminal 31. The mobile terminal 31 reads a code (for example, a QR code or a barcode) attached to goods through the code reader (or a code reader function) 31a disposed in the mobile terminal 31 in response to the user X's operation, and causes an item goods number represented by the read code to be displayed on the item goods input region. In the present embodiment, the item goods number can be simply input using the code reader (or a code reader function) 31a as described above.

Further, in the slip search screen, the user X may select or designate any one or more among the type of slip, a detailed search condition, a business process which is a search target, and a search keyword. Further, in the slip search screen, the user X may make multiple selections or multiple designations on each of the type of slip, a detailed search condition, and a business process which is a search target.

When the search condition is selected or designated in the slip search screen, the user X pushes down a search button 605 through the touch operation.

When the search button 605 is pushed down in a state in which the search condition is selected or designated, the mobile terminal 31 provides the mobile terminal management server 10 with the selected or designated search condition, and makes a search request (step S109).

Upon receiving the search request, the mobile terminal management server 10 searches for slip data matching the search condition provided according to the received provision request with reference to the process flow data stored in the process flow data temporary storage DB 16 (step S110).

When the slip data is searched for according to the search condition, the mobile terminal management server 10 generates search result list display screen information representing the search result list display screen displaying a list of searched slip data as a search result, and transmits the search result list display screen information to the mobile terminal 31 (step S111).

Upon receiving the search result list display screen information, the mobile terminal 31 causes the search result list display screen represented by the received search result list display screen information to be displayed on the display unit included in the mobile terminal 31 (step S112).

Fig. 10 is an explanatory diagram illustrating an example of the search result list display screen. As illustrated in Fig. 10, the search result list display screen is provided with a display region 701 for displaying the search result, a back button B1 pushed down to return to a previous screen, and an edit button B3 pushed down to edit the search result. Further, when the process flow type (inventory sale, direct shipping sale, and the like) is selected by the touch operation in the search result list display screen, the mobile terminal 31 transmits a request of acquiring corresponding slip data to the mobile terminal management server 10. The mobile terminal management server 10 transmits the corresponding slip data to the mobile terminal 31 with reference to the process flow data stored in the process flow data temporary storage DB 16 according to the slip data acquisition request. Then, the mobile terminal 31 displays the received slip data on the display screen of the display unit.

When the user X performs an operation of ending access such as an operation of ending a browser in the search result list display screen (Y in step S113), the mobile terminal 31 transmits a logout request to the mobile terminal management server 10 (step S114). Further, when an operation of continuing access such as an operation of pushing down the back button B1 is made (N in step S113), the mobile terminal 31 causes the process to proceed to step S108, and displays the slip search screen (see Fig. 7).

When the search result list display screen information is transmitted in step S111, the mobile terminal management server 10 starts to measure a time (standby time) in which an information exchange with the mobile terminal 31 is not performed, and monitors whether or not the standby time has elapsed a predetermined time (for example, 5 minutes, 10 minutes, 30 minutes, and the like) (has reached a predetermined time) (step S115).

When the logout request is received during measurement of the standby time (Y in step S116), the mobile terminal management server 10 stops measuring the standby time, and performs a logout process of releasing the login state (step S117).

Further, when it is determined that the standby time has elapsed a predetermined time (Y in step S115), the mobile terminal management server 10 ends measuring the standby time, and performs a logout process of releasing the login state (step S117).

In the above-described way, it is determined whether or not it is permitted to log in the mobile terminal management server 10 according to the login request from the mobile terminal 31 which becomes operable by the login process. When it is permitted to log in, a process flow data provision request is received, and a process of providing the requested process flow data is executed.

As described above, in the slip data providing process, by setting the process flow data temporary storage DB 16 as a search target, the mobile terminal 31 needs not access a part (specifically, the business application program DB 17 and the process flow DB 18a) functioning as the core business server in the mobile terminal management server 10. Thus, security can be improved when slip data is provided to the mobile terminal 31. Further, the process flow DB 18a may be set as the search target.

In the above-described embodiment, report data satisfying a search condition is searched for with reference to the process flow table PT storing process flow data including various kinds of data related to a process flow including a plurality of business processes, the process flow data is data including status data, common data, and process-specific data, the status data is data representing a progress status of each of the plurality of business processes included in the process flow, the common data is data that is common to business processes included in the same process flow, and the process-specific data is data specific to each business process included in the same process flow, and thus it is possible to reduce a processing load required for a search of data in a business system. In the business system of the related art, since report data is managed by an individual data table for each business process, when a search is performed, it is necessary to refer to all data tables on a relevant business process. For this reason, in a business system dealing with a huge amount of data, a processing load required for a search process is very large. In the above-described embodiment, the process flow data including the status data, the common data, and the process-specific data is constructed, and a search is performed with reference to the process data table. Thus, since a plurality of data tables are not referred to, it is possible to significantly reduce a processing load required for a search of data in a business system, and it is also possible to significantly reduce a creation load of a processing program for a data search.

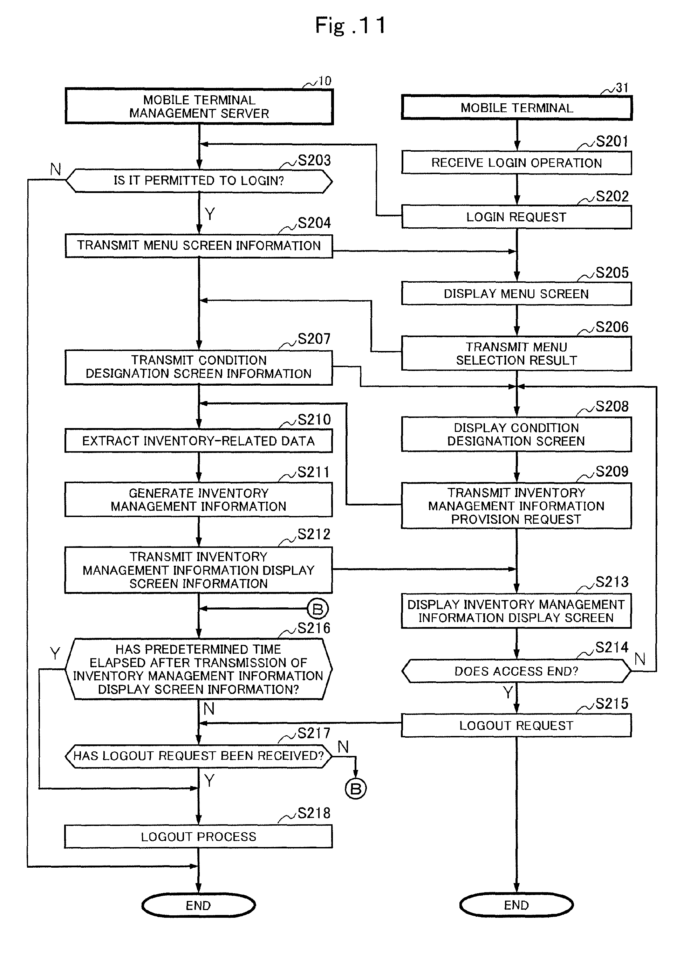

Fig. 11 is a flowchart illustrating an example of a production management information providing process executed, for example, by the mobile terminal management server 10 in the report inquiry system 500 according to the present embodiment. Here, the description will proceed in connection with an example in which the mobile terminal management server 10 provides the production management information according to a request from the mobile terminal 31 used by the user X.

In the production management information provision process, the process of step S201 to step S205 is the same as the process of step S101 to step S105 of the slip data providing process, and a description thereof is not be made herein.

In step S205, the user X pushes down any one of the menu buttons M1 to M6 by a touch operation (a contact operation by a finger) in the menu screen (see Fig. 6) displayed on the display unit of the mobile terminal 31. In the present embodiment, the inventory management button M5 is assumed to be pushed down. The process when the other menu buttons M1 to M4 and M6 are pushed down will not be made herein.

When the inventory management button M5 is pushed down in the menu screen, the mobile terminal 31 transmits information representing that the inventory management button M5 has been pushed down to the mobile terminal management server 10 as the menu selection result (step S206).

Upon receiving the menu selection result representing that the inventory management button M5 has been pushed down, the inventory management information processing unit 11b of the mobile terminal management server 10 transmits condition designation screen information representing a condition designation screen used to designate a search condition to the mobile terminal 31 (step S207).

Upon receiving the condition designation screen information, the mobile terminal 31 causes the condition designation screen represented by the received the condition designation screen information to be displayed on the display unit included in the mobile terminal 31 (step S208).

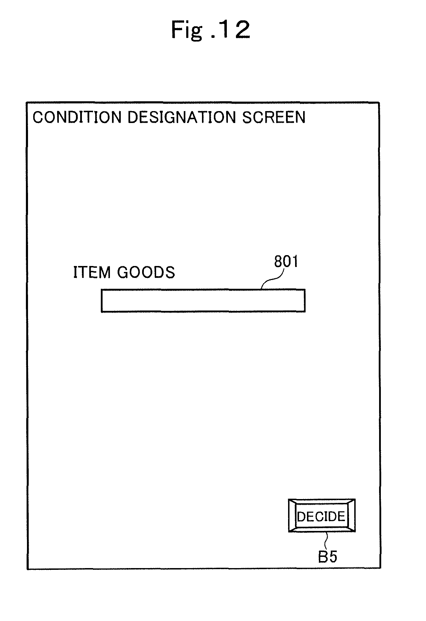

Fig. 12 is an explanatory diagram illustrating an example of the condition designation screen. As illustrated in Fig. 12, the condition designation screen is provided with an item goods input region 801 through which item goods of a product is input as a search condition and a decide button B5 pushed down to decide the item goods input to the item goods input region 801 as the search condition.

In the condition designation screen, the user X operates an input unit such as a keyboard displayed on the screen, for example, as the item goods input region 801 is touched, and inputs one or more item goods serving as a search target to the item goods input region 801. When the input of the item goods ends, the user X pushes down the decide button B5 by the touch operation. In this way, the user X designates the item goods of the product as the search condition.

When the decide button B5 is pushed down after the item goods are input, the mobile terminal 31 designates a search target product by presenting the item goods, and transmits the inventory management information provision request to the mobile terminal management server 10 (step S209).

Upon receiving the inventory management information provision request, the mobile terminal management server 10 searches for slip data associated with the item goods presented according to the received provision request with reference to the process flow data stored in the process flow data temporary storage DB 16, and extracts the inventory-related data(see Fig. 4) by extracting an item related to inventory management of the designated item goods in the searched slip data (step S210). The inventory-related data includes quantity data for inventory management which is registered as the process flow data in advance.

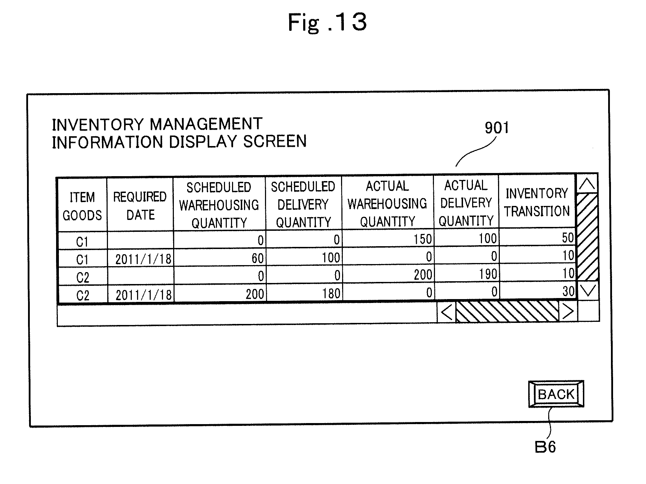

When the inventory-related data is extracted, the mobile terminal management server 10 generates inventory management information (see Fig. 13) configured with certain items based on the extracted inventory-related data (step S211). In the present embodiment, the mobile terminal management server 10 generates the inventory management information (see Fig. 13) by sorting item goods, a required date, a scheduled warehousing quantity, a scheduled delivery quantity, an actual warehousing quantity, and an actual delivery quantity among items configuring the inventory-related data using item goods and a required date as a key item, counting a quantity in the same key item, and adding an inventory transition item obtained by calculating transition of an inventory quantity based on the counting result.

When the inventory management information is generated, the mobile terminal management server 10 generates inventory management information display screen information representing an inventory management information display screen used to display the generated inventory management information, and transmits the generated inventory management information display screen information to the mobile terminal 31 (step S212).

Upon receiving the inventory management information display screen information, the mobile terminal 31 causes the inventory management information display screen represented by the received inventory management information display screen information to be displayed on the display unit included in the mobile terminal 31 (step S213).

Fig. 13 is an explanatory diagram illustrating an example of the inventory management information display screen. As illustrated in Fig. 13, the inventory management information display screen is provided with an inventory management information display region 901 in which the inventory management information is displayed and a back button B6 pushed down to return to a previous screen. In the present embodiment, as illustrated in Fig. 13, item goods, a required date, a scheduled warehousing quantity, a scheduled delivery quantity, an actual warehousing quantity, an actual delivery quantity, and inventory transition are displayed on the inventory management information display region 901 as the inventory management information.

When the user X performs an operation of ending access such as an operation of ending a browser in the inventory management information display screen (Y in step S214), the mobile terminal 31 transmits a logout request to the mobile terminal management server 10 (step S215). Further, when an operation of continuing access such as an operation of pushing down the back button B6 is performed (N in step S214), the mobile terminal 31 causes the process to proceed to step S208, and the condition designation screen to be displayed (see Fig. 12).

When the inventory management information display screen information is transmitted in step S212, the mobile terminal management server 10 starts to measure a time (standby time) in which an information exchange with the mobile terminal 31 is not performed, and monitors whether or not the standby time has elapsed a predetermined time (for example, 5 minutes, 10 minutes, 30 minutes, and the like) (has reached a predetermined time) (step S216).

When the logout request is received during measurement of the standby time (Y in step S217), the mobile terminal management server 10 stops measuring the standby time, and performs a logout process of releasing the login state (step S218).

when it is determined that the standby time has elapsed a predetermined time (Y in step S216), the mobile terminal management server 10 ends measuring the standby time, and performs a logout process of releasing the login state (step S218).

In the above-described way, it is determined whether or not it is permitted to log in the mobile terminal management server 10 according to the login request from the mobile terminal 31 which becomes operable by the login process. When it is permitted to log in, the inventory management information provision request is received, and a process of providing the requested inventory management information is executed.

In the above example, in the inventory management information provision process, the slip data search target is the process flow data temporary storage DB 16, but the process flow DB 18a may be the search target.

As described above, in the above-described embodiment, the mobile terminal management server 10 that is a server run by ERP and provides various kinds of data via the communication network 40 according to the request from the mobile terminals 31 to 3N used by the users includes the process flow data table PT that stores the process flow data including various kinds of data related to the process flow including a plurality of business processes, the process flow data is data including the status data, the common data, and the process-specific data, the status data is data representing the progress statuses of the plurality of business processes included in the process flow, the common data is data that is common to business processes included in the same process flow, the process-specific data is data specific to each business process included in the same process flow, the process flow data includes the inventory-related data including the quantity data representing a quantity related to an inventory of a product, and the mobile terminal management server 10 is configured to provide the condition designation screen used to designate the search condition according to the request from the mobile terminal 31, receive and accept the search condition designated through the condition designation screen from the mobile terminal 31, extract the inventory-related data including an item related to the inventory management of the product represented by the accepted search condition from the process flow data stored in the process flow data table PT, generate the inventory management information including the inventory transition of the product represented by the designated search condition based on the inventory-related data, and provide the generated inventory management information to the mobile terminal 31, and thus in the business system that provides information related to a report to the mobile communication terminal (the mobile terminals 31 to 3N), it is possible to reduce a processing load required for data processing in the business system and rapidly output valid information (inventory management information).

In other words, the report data satisfying the search condition is searched with reference to the process flow table PT storing the process flow data including various kinds of data related to the process flow including a plurality of business processes, the process flow data is data including the status data, the common data, and the process-specific data, the status data is data representing the progress statuses of the plurality of business processes included in the process flow, the common data is data that is common to business processes included in the same process flow, and the process-specific data is data specific to each business process included in the same process flow, and thus it is possible to reduce the processing load required for a data search in the business system which is necessary to generate the inventory management information. In the business system of the related art, since report data is managed by an individual data table for each business process, when a search is performed, it is necessary to refer to all data tables on a relevant business process. For this reason, in a business system dealing with a huge amount of data, a processing load required for a search process is very large. In the above-described embodiment, the process flow data including the status data, the common data, and the process-specific data is constructed, a search of information necessary for generating the inventory management information is performed with reference to the process data table, and thus a plurality of data tables are not referred to, it is possible to significantly reduce a processing load required for a search of data in the business system that is necessary for generating the inventory management information, and it is possible to significantly reduce a creation load of a processing program for a data search.

Further, the inventory-related data that is registered in advance is extracted from the process flow data stored in the process flow data table PT, and thus it is possible to significantly reduce a processing load in the business system that is necessary for generating the inventory management information.

Further, in the above-described embodiment, the mobile terminal management server 10 is configured to specify the quantity data related to the corresponding business process and register the specified quantity data as the process flow data when report data for a business process of a manufacturing warehousing schedule, a manufacturing delivery schedule, warehousing, or a delivery is registered as the process flow data, and since it is possible to register the inventory-related data as the process flow data table in advance, and it is unnecessary to generate the inventory-related data when generating the inventory management information, it is possible to significantly reduce a processing load in the business system that is necessary for generating the inventory management information.

Further, in the above-described embodiment, the database (for example, the process flow DB 18a) is disposed in the process flow data management server (for example, the mobile terminal management server 10) that manages the process flow data generated for each process flow, and the process flow data management server is configured to provide the report data searched for with reference to the process flow data to the client according to the request from the client (for example, the mobile terminals 31 to 3N or the enterprise resource planning systems 100, 200, and 300). Thus, it is possible to construct a system in which a processing load required to provide the report data is reduced.

Further, although not particularly mentioned in the above-described embodiment, the mobile terminal management server 10 executes the above-described processes (see Fig. 5 and Fig. 11) according to a processing program (a mobile terminal management program) stored in a storage medium equipped therein.

### Industrial Applicability

According to the present invention, it is useful in reducing a processing load required for a data search and in outputting valid information rapidly in a business system (specifically, an ERP system) that provides information about a report to a mobile communication terminal.

### Reference Signs List

- 10: mobile terminal management server
- 20: relay
- 31 to 3N: mobile terminals
- 40: communication network
- 51, 52, 53: communication network
- 100, 200, 300: enterprise resource planning system
- 110, 310: core business server
- 120, 220: DWH server
- 500: report inquiry system

## Claims

1. A mobile terminal management server that is a server run by enterprise resource planning (ERP) and provides various kinds of data via a communication network according to a request from a mobile terminal used by a user, comprising:
a process flow data storage unit that stores process flow data including various kinds of data related to a process flow including a plurality of business processes,
the process flow data is data including status data, common data, and process-specific data,
the status data representing progress statuses of the plurality of business processes included in the process flow,
the common data being common to business processes included in the same process flow,
the process-specific data being specific to each business process included in the same process flow,
the process flow data including inventory-related data including quantity data representing a quantity related to an inventory of a product,
a condition designation screen providing unit that provides a condition designation screen used to designate a search condition according to a request from the mobile terminal;
a search condition accepting unit that receives and accepts the search condition designated through the condition designation screen from the mobile terminal;
an inventory-related data extracting unit that extracts inventory-related data including an item related to inventory management of a product represented by the search condition accepted by the search condition accepting unit from the process flow data stored in the process flow data storage unit;
an inventory management information generating unit that generates inventory management information including inventory transition of the product represented by the designated search condition based on the inventory-related data; and
an inventory management information providing unit that provides the inventory management information generated by the inventory management information generating unit to the mobile terminal.

2. The mobile terminal management server according to claim 1,
wherein a quantity data registering unit that specifies quantity data related to a business process and registers the specified quantity data as the process flow data when report data of a business process of a manufacturing warehousing schedule, a manufacturing delivery schedule, warehousing, or a delivery is registered as the process flow data.

3. The mobile terminal management server according to claim 1 or 2,
wherein the quantity data includes a scheduled warehousing quantity, a scheduled delivery quantity, an actual warehousing quantity, and an actual delivery quantity.

4. The mobile terminal management server according to claim 3,
wherein the inventory management information includes item goods, a required date, a scheduled warehousing quantity, a scheduled delivery quantity, an actual warehousing quantity, an actual delivery quantity, and inventory transition.

5. A mobile terminal management program that operates enterprise resource planning (ERP) and causes a mobile terminal management server to execute a process of providing various kinds of data via a communication network according to a request from a mobile terminal used by a user,
the mobile terminal management server including a process flow data storage unit that stores process flow data including various kinds of data related to a process flow including a plurality of business processes,
the process flow data is data including status data, common data, and process-specific data,
the status data representing progress statuses of the plurality of business processes included in the process flow,
the common data being common to business processes included in the same process flow,
the process-specific data being specific to each business process included in the same process flow,
the process flow data including inventory-related data including quantity data representing a quantity related to an inventory of a product,
the mobile terminal management program causing the mobile terminal management server to execute:
a condition designation screen providing process of providing a condition designation screen used to designate a search condition according to a request from the mobile terminal;
a search condition accepting process of receiving and accepting the search condition designated through the condition designation screen from the mobile terminal;
an inventory-related data extracting process of extracting inventory-related data including an item related to inventory management of a product represented by the search condition accepted in the search condition accepting process from the process flow data stored in the process flow data storage unit;
an inventory management information generating process of generating inventory management information including inventory transition of the product represented by the designated search condition based on the inventory-related data; and
an inventory management information providing process of providing the inventory management information generated in the inventory management information generating process to the mobile terminal.
